# EUROPEAN PATENT APPLICATION

(11) **EP 2 575 017 A1**
(43) Date of publication of application: **03.04.2013**
(21) Application number: 12186154.6
(22) Date of filing: 26.09.2012
(51) Int. Cl.: G06F 3/044

(54) **Touch sensing apparatus and method of manufacturing the same**

(30) Priority: 30.09.2011 KR 20110100368; 21.11.2011 KR 20110121807
(71) Applicant: Melfas, Inc., Seoul (KR)
(72) Inventor: Kim, Jae Hong, Seoul (KR); Nam, Sung Il, Seoul (KR)
(74) Representative: Zardi, Marco

(57) **Abstract**

Disclosed is a touch sensing apparatus having a transparent substrate that includes a touch sensing region and a peripheral region outside the touch sensing region. The touch sensing region may include a pair of column electrodes extending in a vertical direction; a plurality of patch electrodes arranged in two columns in the vertical direction, the two columns of patch electrodes interposed between the pair of column electrodes without an intervening column electrode; a plurality of first wirings electrically connected to the pair of column electrodes; and a plurality of second wirings electrically connected to the two columns of patch electrodes.

## Description

### CROSS-REFERENCE TO RELATED APPLICATIONS

This application claims the benefit of Korean Patent Application Nos. 10-2011-0100368, filed on September 30, 2011, and 10-2011-0121807, filed on November 21, 2011, which are hereby incorporated by reference for all purposes as if fully set forth herein.

### BACKGROUND OF THE INVENTION

### Field of the Invention

The present invention relates to a touch sensing apparatus and a method of manufacturing the same, and more particularly, to a touch sensing apparatus which has improved touch sensing accuracy and uses separate circuit boards, and a method of manufacturing the same.

### Discussion of the Related Art

A touch sensing apparatus recognizes a user's screen touch or gesture as input information. Touch panels of touch sensing apparatuses are classified into resistive, capacitive, ultrasonic, and infrared touch panels according to their driving method. Of these touch panels, capacitive touch panels are drawing much attention due to ease of multi-touch input.

The structure of a capacitive touch panel is an important factor in sensing the change in capacitance more accurately.

A touch panel may have a two-layered structure. Here, a touch sensor may be implemented as an array of pixels formed by a plurality of sense electrode traces (e.g., traces extending in an X-axis direction) and a plurality of drive electrode traces (e.g., traces extending in a Y-axis direction) disposed on the sense electrode traces and intersecting the sense electrode traces. The drive and sense electrode traces may be separated by a dielectric substance such as polyethylene terephthalate (PET) or glass. The touch panel including the drive electrode traces and the sense electrode traces under the drive electrode traces has drawbacks of a high manufacturing cost and a large thickness. These drawbacks are attributable to the process of bonding the two layers of electrodes and the two-layered structure.

Therefore, a touch panel having a single layer of touch sensors formed in the same plane on a substrate has been suggested. This invention is disclosed in Korean Patent Application No. 10-2007-0021332, entitled "Touch Location Detecting Panel Having a Simple Layer Structure," filed on March 7, 2007. The content of the invention is incorporated by reference in the present specification.

The drive and sense electrode traces may be manufactured as bars extending in a first axis direction and as partitioned electrodes extending in a second axis direction. The bars extending in the first axis direction are connected to individual metal wirings within a boundary region of the touch panel. Of the partitioned electrodes extending in the second axis direction, the electrodes formed on the same first axis are connected to each other by the individual metal wirings within the boundary region of the touch panel.

As described above, a touch sensing apparatus uses wiring patterns typically made of metal to deliver a sensing signal generated by a touch to a touch sensor chip. The wiring patterns are electrically connected to drive and sense electrode traces and thus deliver the sensing signal to the touch sensor chip. The wiring patterns are placed not in an image displaying region of a touch sensing panel but in a boundary region, for example, in a bezel region of the touch sensing panel. Therefore, the wiring patterns typically have a very small width, and a gap between the wiring patterns typically is very small. The metal wirings within the boundary region can be formed on the same surface of a substrate as the partitioned electrodes and bars. However, they can also be formed in two layers in order to reduce the size of the bezel region.

To form the metal wirings in the boundary region in two layers, a first wiring layer may be formed on the same surface of the substrate as the partitioned electrodes and the bars, and then an insulation treatment may be performed. After the insulation treatment, a second wiring layer may be formed.

This method, however, leads to a high defect rate due to the nature of the process of forming the wiring patterns. In addition, a single layer of touch sensors are far sensitive than two layers of touch sensors to noise generated by a wiring region and noise generated, for example, by a display installed under the sensors. Accordingly, a touch sensing apparatus having a single layer of touch sensors has a lower sensing sensitivity.

### SUMMARY OF THE INVENTION

Accordingly, the present invention is directed to a touch sensing apparatus and a method of manufacturing the same that substantially obviates one or more of the problems due to limitations and disadvantages of the related art.

An advantage of the present invention is to provide a touch sensing apparatus having improved touch sensing accuracy and a method of manufacturing the same.

Another advantage of the present invention is to provide a touch sensing apparatus whose actual sensing region is increased for a given number of electrode channels disposed in a touch sensing panel and a method of manufacturing the same.

Another advantage of the present invention is to provide a touch sensing apparatus having a reduced defect rate during the formation of wiring patterns and a method of manufacturing the same.

Additional features and advantages of the invention will be set forth in the description which follows, and in part will be apparent from the description, or may be learned by practice of the invention. These and other advantages of the invention will be realized and attained by the structure particularly pointed out in the written description and claims hereof as well as the appended drawings.

To achieve these and other advantages and in accordance with the purpose of the present invention, as embodied and broadly described, a touch sensing apparatus having a transparent substrate that includes a touch sensing region and a peripheral region outside the touch sensing region, the touch sensing region may include a pair of column electrodes extending in a vertical direction; a plurality of patch electrodes arranged in two columns in the vertical direction, the two columns of patch electrodes interposed between the pair of column electrodes without an intervening column electrode; a plurality of first wirings electrically connected to the pair of column electrodes; and a plurality of second wirings electrically connected to the two columns of patch electrodes.

In another aspect of the present invention, a method of manufacturing a touch sensing apparatus may include preparing a transparent substrate having a touch sensing region and a peripheral region outside the touch sensing region; forming a pair of column electrodes that extend in a vertical direction in the touch sensing region; forming a plurality of patch electrodes to be arranged in two columns in the vertical direction, the two columns of patch electrodes interposed between the pair of column electrodes without an intervening column electrode; forming a plurality of first wirings that are electrically connected to the pair of column electrodes; and forming a plurality of second wirings that are electrically connected to the two columns of patch electrodes.

According to an aspect of the invention, a touch sensing apparatus having a transparent substrate that may include a touch sensing region and a peripheral region outside the touch sensing region, the touch sensing region comprising: a pair of column electrodes extending in a vertical direction; a plurality of patch electrodes arranged in two columns in the vertical direction, the two columns of patch electrodes interposed between the pair of column electrodes without an intervening column electrode; a plurality of first wirings electrically connected to the pair of column electrodes; and a plurality of second wirings electrically connected to the two columns of patch electrodes.

The pair of column electrodes, the two columns of patch electrodes, the first wirings and the second wirings may be formed as a single pattern on a surface of the transparent substrate. The second wirings may be electrically connected to the two columns of patch electrodes through a space between the two columns of patch electrodes.

The apparatus may further comprise a circuit board including a first circuit board on a first side of the touch sensing region and a second circuit board on a second side facing the first side of the touch sensing region. Each of the first circuit board and the second circuit board may be electrically connected to the first wirings and the second wirings, respectively.

Each of the first circuit board and the second circuit board may comprise a first layer comprising a plurality of wirings that extend in the vertical direction; a second layer comprising a plurality of wirings that extend in a horizontal direction; and an insulating layer between the first layer and the second layer. One of the wirings of the first layer may be electrically connected to one of the wirings of the second layer through a via hole.

The first wirings and the second wirings may extend to the peripheral region. The peripheral region may include a plurality of metal wirings electrically connected to the first wirings and the second wirings. The metal wirings are also electrically to the wirings of the first layer.

The peripheral region may include a connection wiring that electrically connects the first circuit board and the second circuit board. The circuit board may further include a third circuit board that electrically connects the first circuit board and the second circuit board.

At least one of the first circuit board and the second circuit board may include a touch sensor chip. The first circuit board and the second circuit board may be flexible printed circuit boards (FPCBs). The pair of the column electrodes may be electrically connected to each other. A structure where the two columns of patch electrodes are interposed between the pair of column electrodes is repeated in the touch sensing region,

A side of each of the pair of column electrodes may neighbor the two columns of the patch electrodes. The other side of each of the pair of the column electrodes may neighbor another column electrode which is electrically isolated from the corresponding column electrode.

The two columns of patch electrodes may comprise a plurality of first patch electrodes which are adjacent to one of the pair of column electrodes and a plurality of second patch electrodes which are adjacent to the other one of the pair of column electrodes. First patch electrodes arranged on substantially the same horizontal axis among the first patch electrodes may be electrically connected to each other. Second patch electrodes arranged on substantially the same horizontal axis among the second patch electrodes may be electrically connected to each other.

Each of the patch electrodes in the two columns may have an uneven portion at a side neighboring a side of each of the pair of column electrodes. The side of each of the pair of column electrodes may be separated from the uneven portions of the patch electrodes and may be conformally formed along the uneven portions.

The uneven portions may have a polygonal or semicircular shape. Each of the pair of column electrodes may include a branch electrode which extends from the side of each of the pair of column electrodes. The touch sensing region may include a plurality of dummy patches between the two columns of patch electrodes and the side of each of the pair of column electrodes and between the other side of each of the pair of column electrodes and another column electrode which is electrically isolated from the corresponding column electrode.

The first circuit board and the second circuit board may be bonded respectively to the touch sensing region at 70 to 150 °C by using an anisotropic conductive film (ACF).

The apparatus may further comprise a display panel displaying an image and a transparent window disposed on a surface of the display panel. The pair of column electrodes and the two columns of patch electrodes may be formed on the transparent window.

A method of manufacturing a touch sensing apparatus may comprise preparing a transparent substrate having a touch sensing region and a peripheral region outside the touch sensing region; forming a pair of column electrodes that extend in a vertical direction in the touch sensing region; forming a plurality of patch electrodes to be arranged in two columns in the vertical direction, the two columns of patch electrodes interposed between the pair of column electrodes without an intervening column electrode; forming a plurality of first wirings that are electrically connected to the pair of column electrodes; forming a plurality of second wirings that are electrically connected to the two columns of patch electrodes; placing a first circuit board on a first side of the touch sensing region; and placing a second circuit board on a second side which faces the first side of the touch sensing region. The first circuit board and the second circuit board may be electrically connected to the first wirings and the second wirings, respectively.

The pair of column electrodes, the two columns of patch electrodes, the first wirings and the second wirings may be deposited on the same layer, formed as a single piece, and simultaneously formed of substantially the same material. The pair of column electrodes, the two columns of patch electrodes, the first wirings and the second wirings may be formed by sputtering a transparent conductive material at 130 to 150 °C and then etching the transparent conductive material.

Each of the first circuit board and the second circuit board may comprise a first layer comprising a plurality of wirings which extend in the vertical direction; a second layer comprising a plurality of wirings which extend in a horizontal direction; and an insulating layer between the first layer and the second layer. The wirings of the first layer may be electrically connected to the wirings of the second layer by via holes.

The forming of the first wirings may comprise extending the first wirings to the peripheral region. The forming of the second wirings may comprise extending the second wirings to the peripheral region. The method may further comprise forming a plurality of metal wirings, which are respectively and electrically connected to the extended first and second wirings, in the peripheral region, and electrically connecting the metal wirings to the wirings of the first layer.

The method further comprise forming two or more marking points in the peripheral region and forming two or more apertures in each of the first circuit board and the second circuit board. The placing of the first circuit board and the placing of the second circuit board may comprise aligning the first circuit board and the second circuit board using the marking points and the apertures. The pair of column electrodes may be electrically connected to each other.

The method may further comprise repeatedly placing a structure where the two columns of the patch electrodes are interposed between the pair of column electrodes in the touch sensing region, A side of each of the pair of column electrodes may neighbor the two columns of the patch electrodes. The other side of each of the pair of the column electrodes may neighbor another column electrode which is electrically isolated from the corresponding column electrode.

Each of the patch electrodes in the two columns may have an uneven portion at a side neighboring a side of each of the pair of column electrodes. The side of each of the pair of column electrodes may be separated from the uneven portions of the patch electrodes and may be conformally formed along the uneven portions.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

FIG. 1 is an exploded perspective view of a touch sensing apparatus according to an embodiment of the present invention;

FIG. 2 is a plan view of a transparent substrate according to an embodiment of the present invention;

FIGS. 3 through 10 are enlarged plan views of transparent substrates according to various embodiments of the present invention;

FIGS. 11 and 12 are plan views of transparent substrates according to various embodiments of the present invention;

FIG. 13 is a plan view of a transparent substrate and circuit boards according to an embodiment of the present invention;

FIG. 14 is a plan view of a circuit board according to an embodiment of the present invention;

FIG. 15 is a cross-sectional view taken along line A-A' of FIG. 13;

FIG. 16 is a plan view of a transparent substrate and circuit boards according to another embodiment of the present invention;

FIG. 17 is an exploded perspective view of a touch sensing apparatus according to another embodiment of the present invention;

FIG. 18 is a cross-sectional view of the touch sensing apparatus shown in FIG. 17; and

FIG. 19 is a flowchart illustrating a method of manufacturing a touch sensing apparatus according to an embodiment of the present invention.

### DETAILED DESCRIPTION OF THE ILLUSTRATED EMBODIMENTS

Reference will now be made in detail to exemplary embodiments of the present invention, examples of which are illustrated in the accompanying drawings.

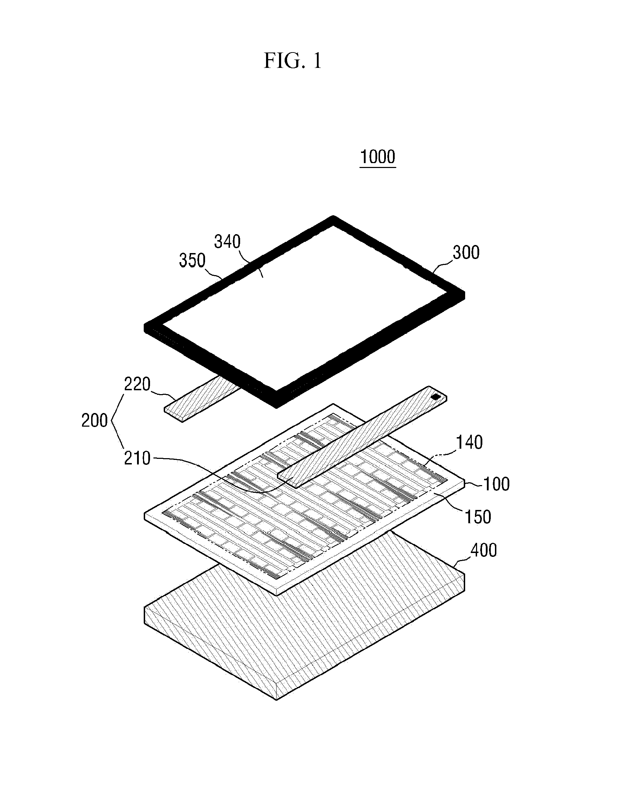

FIG. 1 is an exploded perspective view of a touch sensing apparatus 1000 according to an embodiment of the present invention.

Referring to FIG. 1, the touch sensing apparatus 1000 includes a transparent substrate 100, a circuit board 200 including a first circuit board 210 and a second circuit board 220, and a transparent window 300. The transparent substrate 100 may be made of a high-strength material such as toughened glass, acrylic resin or a hard material applicable to flexible displays, such as polyethylene terephthalate (PET), polycarbonate (PC), polyethersulfone (PES), polyimide (PI) or polymethly methacrylate (PMMA).

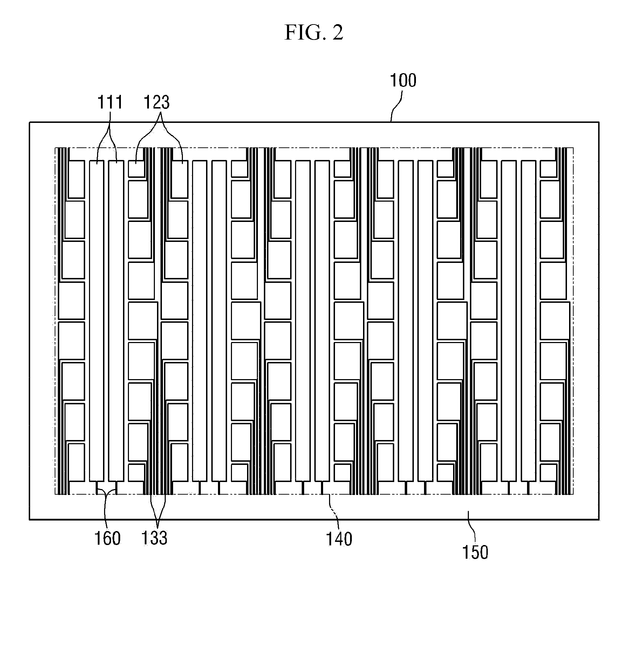

The transparent substrate 100 includes a touch sensing region 140 and a peripheral region 150. The touch sensing region 140 is a region that senses input information generated by a user's touch or gesture. The touch sensing region 140 may include a plurality of column electrodes 111, a plurality of patch electrodes 123, a plurality of first wirings 160, and a plurality of second wirings 133, as illustrated in FIG. 2. The peripheral region 150 is a region that surrounds the touch sensing region 140. In the peripheral region 150, wiring patterns that deliver sensing signals generated by the touch sensing region 140 may exist. For ease of description, the transparent substrate 100 is divided into the touch sensing region 140 and the peripheral region 150. However, the touch sensing region 140 and the peripheral region 150 can also be integrated into one region, and a user's input information can also be sensed by the peripheral region 150. A more detailed description of the transparent substrate 100 including the touch sensing region 140 and the peripheral region 150 will be described below with reference to FIGS. 2 through 12.

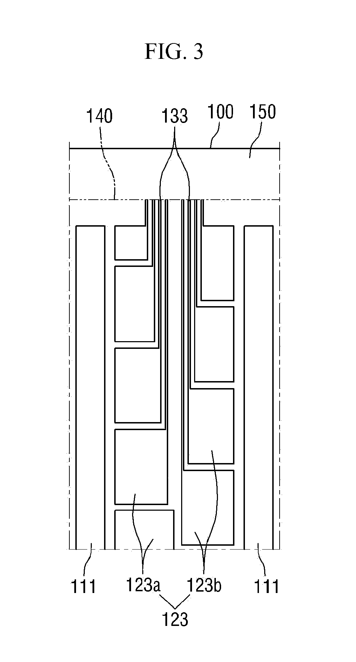

FIG. 2 is a plan view of a transparent substrate 100 according to an embodiment of the present invention. FIGS. 3 through 9 are enlarged plan views of transparent substrates 100 according to various embodiments of the present invention.

Referring to FIGS. 2 and 3, a touch sensing region 140 may include a plurality of column electrodes 111 extending in a vertical direction, a plurality of patch electrodes 123 arranged in a plurality of columns to be adjacent to a side of each of the column electrodes 111, a plurality of first wirings 160 that are respectively and electrically connected to the column electrodes 111, and a plurality of second wirings 133 that are respectively and electrically connected to the patch electrodes 123. For ease of description, the column electrodes 111 shown in FIG. 2 are bar-shaped. However, it would be appreciated that the column electrodes 111 can also have other shapes extending in the vertical direction. The column electrodes 111 can be used as sensing electrodes for sensing touches in a touch sensing apparatus according to the present invention.

The first wirings 160 that are respectively and electrically connected to the column electrodes 111 may be formed in the touch sensing region 140. The first wirings 160 may have a width of approximately 50 µm or less, and a gap between the first wirings 160 may be approximately 50 µm or less. When the column electrodes 111 are used as sensing electrodes as described above, the first wirings 160 that are electrically connected to the column electrodes 111 may deliver sensing signals.

In the touch sensing region 140, the patch electrodes 123 may be arranged in a plurality of columns to be adjacent to a side of each of the column electrodes 111. Each of the patch electrodes 123 may be vertically disposed in the column. The patch electrodes 123 can be used as driving electrodes for delivering driving signals in a touch sensing apparatus 1000 according to the present invention.

The touch sensing region 140 may include the second wirings 133 that are respectively and electrically connected to the patch electrodes 123. When the patch electrodes 123 are used as driving electrodes, the second wirings 133 that are electrically connected to the patch electrodes 123 may deliver driving signals.

The column electrodes 111, the patch electrodes 123, the first wirings 160 and the second wirings 133 may be formed as a single piece or pattern wherein, for example, they are formed of substantially the same material, at substantially the same time, and on substantially the same layer. Examples of an applicable transparent conductive material include oxide such as indium tin oxide (ITO), indium zinc oxide (IZO), zinc oxide (ZO), carbon nanotubes, metal nanowires, conductive polymers, or the like.

The column electrodes 111, the patch electrodes 123, the first wirings 160 and the second wirings 133 may be formed as a single piece or pattern on a surface of the transparent substrate 100 by depositing a transparent conductive material on a surface of the transparent substrate 100 and then etching the transparent conductive material to form a single pattern having the electrode and wiring patterns.

The transparent window 300 is touched by a conductive object such as a user's body or a stylus pen. Thus, the transparent window 300 should have high hardness. In addition, the transparent substrate 100 should have a proper hardness. The transparent substrate 100 and the transparent window 300 are typically made of toughened glass or a high hardness plastic material, such as a combination of PMMMA, PC and PET, and have a thickness of 0.5 T or greater.

A transparent conductive material such as ITO tends to be deposited at high temperature. When the transparent substrate 100 and the transparent window 300 are made of toughened glass with a thickness grater than a predetermined thickness, the toughened glass, by its nature, may lose its toughened feature during the deposition process of the transparent conductive material at high temperature. Even when the transparent substrate 100 and the transparent window 300 are made of plastic, their hardness often changes at high temperature. Therefore, forming transparent electrodes and transparent wirings directly on the transparent substrate 100 and the transparent window 300 is more difficult than forming transparent electrodes and transparent wirings on a separate transparent substrate and bonding the transparent substrate to the transparent substrate 100 and the transparent window 300.

Hence, sophisticated low-temperature deposition technology should be used, and, as a result, there is a limit to finely forming transparent electrode patterns and transparent wiring patterns, that is, to reducing the gap between the patterns.

According to an embodiment of the present invention, each electrode and each wiring are made of a transparent conductive material such as ITO. The transparent conductive material is sputtered on a surface of the transparent substrate 100 or the transparent window 300 at approximately 130 to 150 °C and then etched to form a single pattern having the electrode patterns and the wiring patterns. The electrode patterns and the wiring patterns are designed to increase touch sensitivity despite a low-temperature deposition process. In addition, connection wirings 181 are formed of a metal material in a peripheral region of the transparent substrate 100 or the transparent window 300 at a temperature range between room temperature and approximately 60 °C. After a curing process, the first circuit board 210 and the second circuit board 220 are bonded to the transparent substrate 100 or the transparent window 300 at a temperature range between approximately 70 and 150 °C using an anisotropic conductive film (ACF), thereby manufacturing a touch sensing apparatus. The connection wirings 181, the first circuit board 210 and the second circuit board 220 will be described in greater detail later.

The connection and disposition relationships among the column electrodes 111, the patch electrodes 123, the first wirings 160 and the second wirings 133 will now be described in more detail with reference to FIGS. 2 and 3.

Referring to FIGS. 2 and 3, the column electrodes 111 in each pair may neighbor each other with two columns of the patch electrodes 123 interposed therebetween. In addition, the column electrodes 111 in each pair which neighbor each other with two columns of the patch electrodes 123 interposed therebetween may be electrically connected to each other. The connection relationship between the column electrodes 111 in each pair will be described later.

A side of each of the column electrodes 111 in each pair that neighbor each other with two columns of the patch electrodes 123 interposed therebetween may neighbor the two columns of the patch electrodes 123, and the other side of each of the column electrodes 111 in each pair may neighbor another column electrode 111 excluding the column electrodes 111 in a corresponding pair, that is, another column electrode 111 that is electrically isolated from the column electrodes 111 in the corresponding pair.

The patch electrodes 123 may be electrically connected to the second wirings 133. The second wirings 133 may be electrically connected to the patch electrodes 123 on a side of each column of the patch electrodes 123 that does not neighbor the column electrode 111. Therefore, referring to FIG. 3, a pair of the column electrodes 111 that are electrically connected to each other may be located in an outer side of the touch sensing region 140, a side of each of the column electrodes 111 in the pair may neighbor one of the two columns of the patch electrodes 123, and the second wirings 133 may be formed between the two columns of the patch electrodes 123.

The patch electrodes 123 may have different horizontal widths in one column. Referring to FIG. 3, because the second wirings 133 are formed between two columns of the patch electrodes 123, the horizontal width of the patch electrodes 123 may increase from the outer portion of the touch sensing region 140 toward the central portion of the touch sensing region 140.

Referring to FIGS. 2 and 3, in the touch sensing apparatus 1000, the column electrodes 111, which detect sensing signals, do not neighbor the second wirings 133 that deliver driving signals. Therefore, the effect of noise generated by the driving signals on the sensing signals can be reduced or minimized. In addition, when a user touches the touch sensing apparatus 1000, the change in capacitance generated between the wirings delivering the user's touch and the wirings delivering the driving signals can be measured by a reduced number of column electrodes 111. This can improve touch sensing accuracy.

The patch electrodes 123 may include a plurality of first patch electrodes 123a which are adjacent to one of the column electrodes 111 in each pair and a plurality of second patch electrodes 123b which are adjacent to the other column electrode 111. Of the first patch electrodes 123a, the first patch electrodes 123a arranged on substantially the same horizontal axis may be electrically connected to each other. Of the second patch electrodes 123b, the second patch electrodes 123b arranged on substantially the same horizontal axis may be electrically connected to each other.

Referring to FIG. 3, the first patch electrodes 123a and the second patch electrodes 123b may be asymmetrical to each other. For example, a horizontal central axis passing through the first patch electrodes 123a may be different from a horizontal central axis passing through the second patch electrodes 123b.

A vertical width of the patch electrodes 123 may be substantially equal to a vertical width of one sensing region. As will be described later, when the patch electrodes 123 are used as driving electrodes, a plurality of portions of each column electrode 111 that have a vertical width substantially equal to that of the patch electrodes 123 may be used to detect sensing signals. Therefore, the vertical width of one sensing region that senses a user's touch input may be equal to or smaller than that of the patch electrodes 123. The width of the sensing region may vary according to the size and aspect ratio of a touch panel.

The structure in which the column electrodes 111 in a pair neighbor each other with two columns of the patch electrodes 123 interposed therebetween as shown in FIG. 3 may be repeated in the touch sensing region 140, as illustrated in FIG. 2. Herein, one column of the patch electrodes 123 and one column electrode 111 may be disposed in the outermost side of the touch sensing region 140, for example, in the rightmost or leftmost side of the touch sensing region 140, as illustrated in FIG. 2. When the column electrodes 111 function as sensing electrodes and when the patch electrodes 123 function as driving electrodes, it is beneficial for the column electrodes 111 to be protected from an external noise. When one column of the patch electrodes 123 are disposed in the rightmost and leftmost sides of the touch sensing region 140, as illustrated in FIG. 2, the two columns of the patch electrodes 123 disposed in both sides and the second wirings 133 electrically connected to the two columns of the patch electrodes 123 can reduce or prevent an external noise from affecting the column electrodes 111, thereby improving touch sensing accuracy.

The column electrodes 111 are electrically connected to the first wirings 160. For ease of description, the first wirings 160 are connected to lower ends of the column electrodes 111, as illustrated in FIG. 2. However, it would be appreciated that the first wirings 160 can also be connected to the column electrodes 111 in a different direction.

As described above, in the touch sensing apparatus 1000, the column electrodes 111 may function as sensing electrodes, the patch electrodes 123 may function as driving electrodes, the second wirings 133 may deliver driving signals, and the first wirings 160 may deliver sensing signals.

More specifically, referring to FIGS. 2 and 3, driving signals may be delivered to the patch electrodes 123 via the second wirings 133. In this case, because the first patch electrodes 123a arranged on substantially the same horizontal axis are electrically connected to each other, driving signals may be simultaneously transmitted to these first patch electrodes 123a. In addition, because the second patch electrodes 123b arranged on substantially the same horizontal axis are electrically connected to each other, driving signals may be simultaneously transmitted to these second patch electrodes 123b.

In addition, a driving signal may be sequentially transmitted to the first patch electrodes 123a and the second patch electrodes 123b. For example, referring to FIG. 3, after a driving signal is transmitted to a patch electrode 123 in a first column on the left, it may be transmitted to a patch electrode 123 in a first column on the right. Then, the driving signal may be transmitted to a patch electrode 123 in a second column on the left. In this way, the driving signal may be sequentially transmitted to the patch electrodes 123 in a zigzag manner. Therefore, when a driving signal is transmitted to a patch electrode 123 near a location at which a user's touch has occurred, the change in a sensing signal generated by a corresponding column electrode 111 may be greatest. In this way, the driving signal is sequentially transmitted to the patch electrodes 123 in all columns to determine a location at which a touch input has occurred.

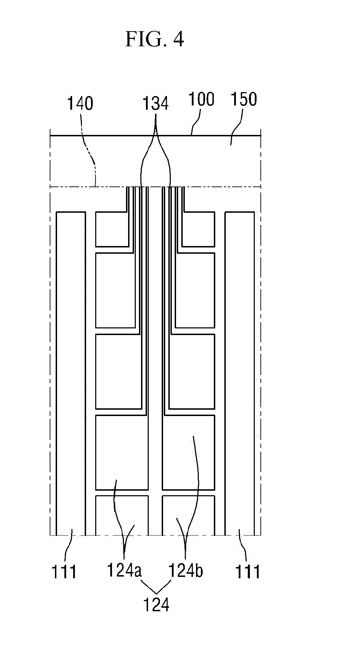

FIG. 4 is an enlarged view of a transparent substrate 100 according to another embodiment of the present invention.

Referring to FIG. 4, a plurality of first patch electrodes 124a may be symmetrical to a plurality of second patch electrodes 124b. For example, a horizontal central axis passing through the first patch electrodes 124a may be substantially the same as a horizontal central axis passing through the second patch electrodes 124b. Other elements and a driving method illustrated in FIG. 4 are substantially the same as those illustrated in FIG. 3, and thus a repetitive description thereof will be omitted.

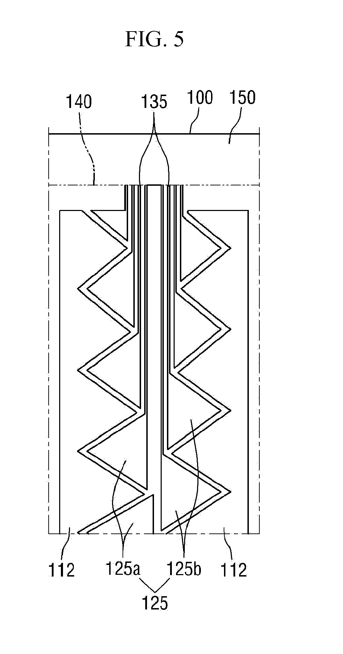

FIGS. 5 through 10 are enlarged plan views of transparent substrates 100 according to various embodiments of the present invention.

Referring to FIGS. 5 through 10, each of a plurality of patch electrodes 125, 126, 127, 128 or 129 may include an uneven portion on a side neighboring a column electrode 112, 113, 114, 115 or 116. As described above, each of column electrodes 112, 113, 114, 115 or 116 in each pair neighbors first patch electrodes 125a, 126a, 127a, 128a or 129a and second patch electrodes 125b, 126b, 127b, 128b or 129b. Therefore, each of the first patch electrodes 125a, 126a, 127a, 128a or 129a and each of the second patch electrodes 125b, 126b, 127b, 128b or 129b may include an uneven portion on a side adjacent to a side of a corresponding column electrode 112, 113, 114, 115 or 116. The uneven portion may have a polygonal or semicircular shape.

A side of each of the column electrodes 112, 113, 114, 115 or 116 may be separated from the uneven portions of the patch electrodes 125, 126, 127, 128 or 129 and may be conformally formed along the uneven portions. That is, a side of each column electrode 112, 113, 114, 115 or 116 which neighbors the first patch electrodes 125a, 126a, 127a, 128a or 129a among the column electrodes 112, 113, 114, 115 or 116 may be separated from the uneven portions of the first patch electrodes 125a, 126a, 127a, 128a or 129a and may be conformally formed along the uneven portions. In addition, a side of each column electrode 112, 113, 114, 115 or 116 which neighbors the second patch electrodes 125b, 126b, 127b, 128b or 129b among the column electrodes 112, 113, 114, 115 or 116 may be separated from the uneven portions of the second patch electrodes 125b, 126b, 127b, 128b or 129b and may be conformally formed along the uneven portions.

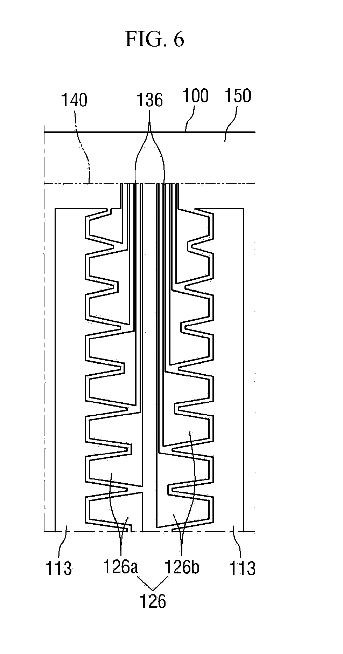

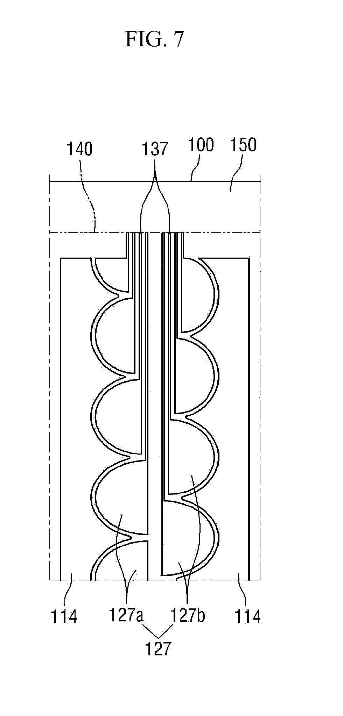

Referring to FIG. 5, the uneven portions of the patch electrodes 125 may have a triangular shape, and a side of each column electrode 112, which is adjacent to the patch electrodes 125, may be separated from the uneven portions and may be conformally formed along the uneven portions. Referring to FIG. 6, the uneven portions of the patch electrodes 126 may have a quadrilateral shape, for example, a trapezoidal shape. A side of each column electrode 113, which is adjacent to the patch electrodes 126, may be separated from the uneven portions and may be conformally formed along the uneven portions. Referring to FIG. 7, the uneven portions of the patch electrodes 127 may have an oval shape and, in some embodiments, may have a semicircular shape. A side of each column electrode 114, which is adjacent to the patch electrodes 127, may be separated from the uneven portions and may be conformally formed along the uneven portions. For ease of description, the uneven portions are illustrated in FIG. 5 through 7 as having triangular, quadrilateral and semicircular shapes. However, the uneven portions can also have other polygonal shapes.

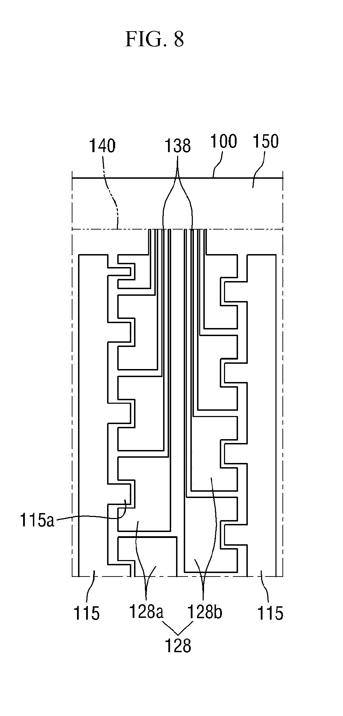

Referring to FIG. 8, a side of each column electrode 115, which neighbors the patch electrodes 128, may have branch electrodes 115a extending therefrom. The number of the branch electrodes 115a may be equal to the number of the patch electrodes 128, and the branch electrodes 115a may be formed in a direction perpendicular to each column electrode 115. In some embodiments, the branch electrodes 115a may be formed at an angle other than a right angle to each column electrode 115. The patch electrodes 128 may be conformally formed along each column electrode 115 and the branch electrodes 115a extending from each column electrode 115.

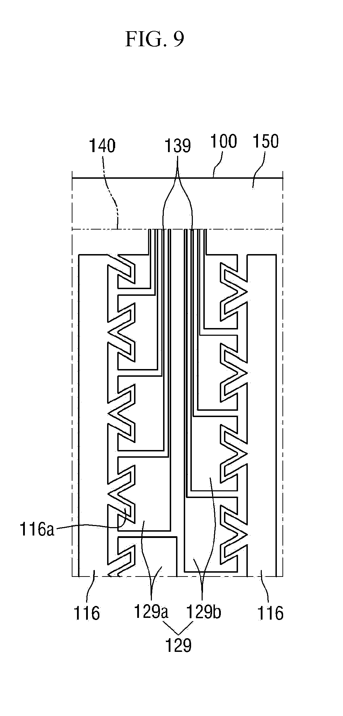

Referring to FIG. 9, a side of each column electrode 116, which neighbors the patch electrodes 129, may have a plurality of branch electrodes 116a extending therefrom. The number of the branch electrodes 116a may be greater than the number of the patch electrodes 129, and the branch electrodes 116a may be at an acute angle to each column electrode 116. In some embodiments, the branch electrodes 116a may be at approximately 45 degrees to each column electrode 116. However, it would be appreciated that the branch electrodes 116a can also be at other arbitrary angles to each column electrode 116. The patch electrodes 129 may be conformally formed along each column electrode 116 and the branch electrodes 116a extending from each column electrode 116.

As described above, patch electrodes may include uneven portions, and each column electrode may be separated from the uneven portions of the patch electrodes and may be conformally formed along the uneven portions. Alternatively, branch electrodes may extend from a side of each column electrode, and patch electrodes may be conformally formed along each column electrode and the branch electrodes extending from each column electrode. In either case, the gap between column electrodes and patch electrodes increases, which, in turn, increases a leakage electric field. Accordingly, the change in capacitance can be sensed more accurately, thus increasing the accuracy of determining a touch input and improving linearity.

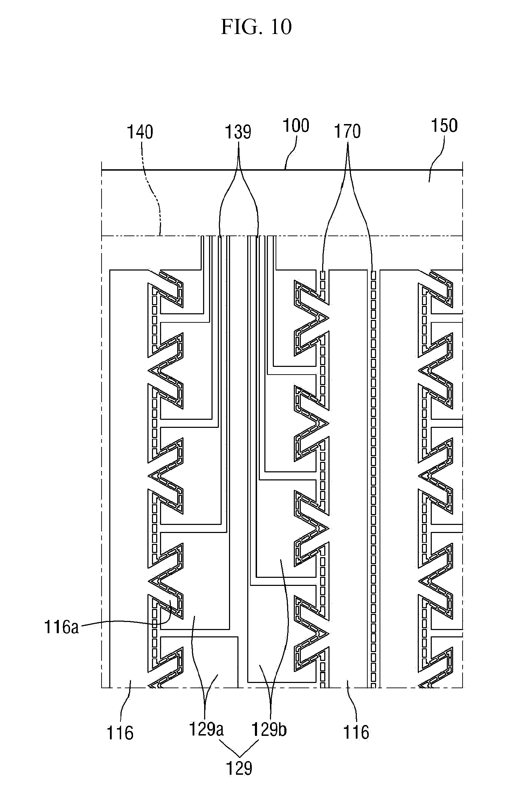

Referring to FIG. 10, the transparent substrate 100 is the same as the transparent substrate 100 of FIG. 9 except that a plurality of dummy patches 170 exist between the patch electrodes 129 and each column electrode 116 including branch electrodes 116a and between neighboring column electrodes 116, and thus a repetitive description thereof will be omitted.

The dummy patches 170 may be formed between the patch electrodes 129 and each column electrode 116 including the branch electrodes 116a and between neighboring column electrodes 116. The dummy patches 170 may have a polygonal shape. In some embodiments, the dummy patches 170 may have a quadrilateral shape. The dummy patches 170 formed between the electrodes can improve visibility.

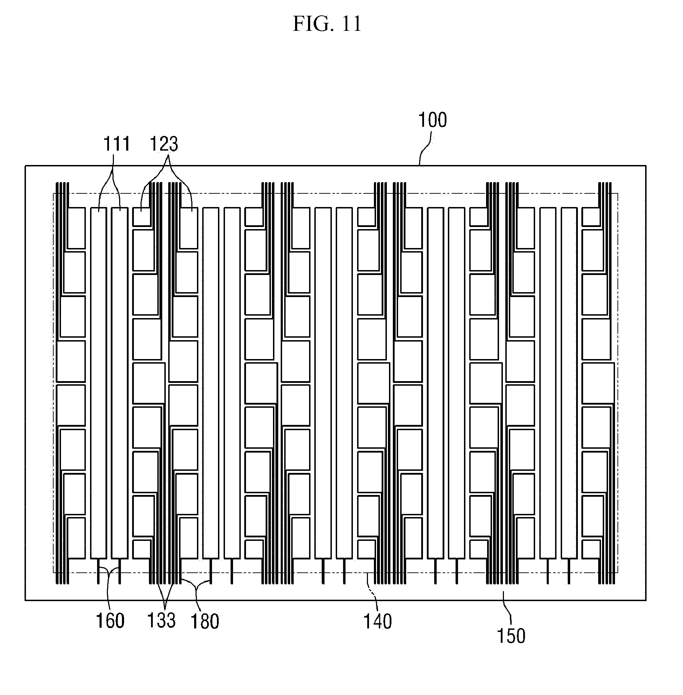

FIG. 11 is a plan view of a transparent substrate 100 according to another embodiment of the present invention.

Referring to FIG. 11, a plurality of metal wirings 180 may further be placed on the transparent substrate 100. Other elements of FIG. 11 excluding the metal wirings 180 are substantially the same as those of FIG. 2, and thus a repetitive description thereof will be omitted.

The metal wirings 180 that are respectively and electrically connected to a plurality of first wirings 160 and a plurality of second wirings 133 may be disposed in a peripheral region of the transparent substrate 100. The metal wirings 180 may be formed separately after the first wirings 160 and the second wirings 133 are formed. When the metal wirings 180 are formed separately, they may be made of silver. Of the metal wirings 180, the metal wirings 180 electrically connected to column electrodes 111 by the first wirings 160 may deliver sensing signals received from the column electrodes 111, and the metal wirings 180 electrically connected to patch electrodes 123 by the second wirings 133 may deliver driving signals to the patch electrodes 123.

In FIG. 11, the metal wirings 180 are formed separately after the formation of the first wirings 160 and the second wirings 133. However, these additional metal wirings 180 are optional in that portions of the first wirings 160 and the second wirings 133 can function as the metal wirings 180. In this case, the first wirings 160 and the second wirings 133 may extend to the peripheral region of the transparent substrate 100.

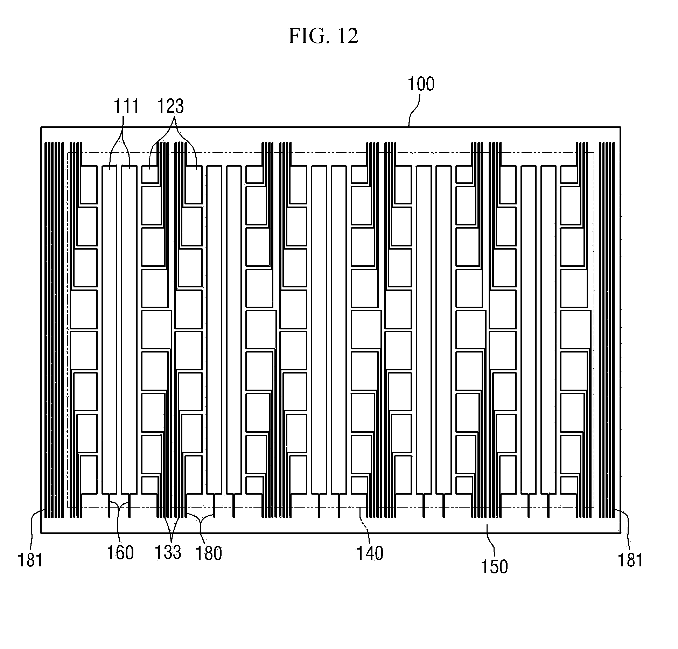

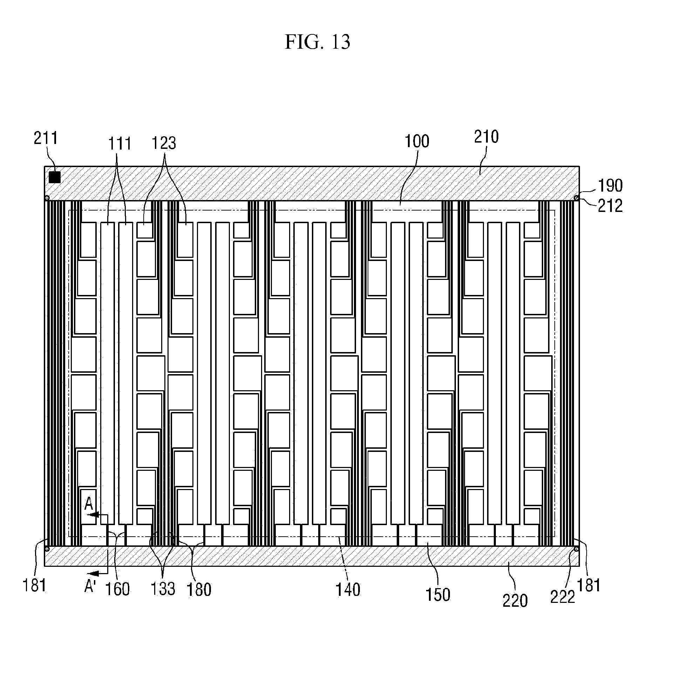

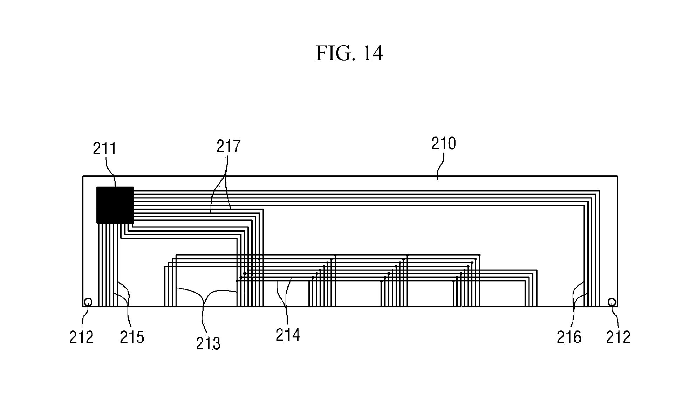

FIG. 12 is a plan view of a transparent substrate 100 according to another embodiment of the present invention. FIG. 13 is a plan view of a transparent substrate 100 and circuit boards according to an embodiment of the present invention. FIG. 14 is a plan view of a circuit board according to an embodiment of the present invention.

Referring to FIG. 13, the transparent substrate 100 is substantially the same as the transparent substrate 100 of FIG. 11 except that a first circuit board 210 and a second circuit board 220 are disposed on a surface of the transparent substrate 100 and that connection wirings 181 electrically connecting the first circuit board 210 and the second circuit board 220 are formed in a peripheral region 150 of the transparent substrate 100, and thus a repetitive description thereof will be omitted.

The first circuit board 210 and the second circuit board 220 may be flexible printed circuit boards (FPCBs) or other flexible circuit boards. The first circuit board 210 may be placed on a side of the touch sensing region 140, and the second circuit board 220 may be placed on another side which faces the side of the touch sensing region 140. Each of the first circuit board 210 and the second circuit board 220 may be electrically connected to a plurality of first wirings 160 and/or a plurality of second wirings 133 through metal wirings 180.

The first circuit board 210 and the second circuit board 220 may be attached to a surface of the transparent substrate 100. The first circuit board 210 and the second circuit board 220 may be attached to a surface of the transparent substrate 100 using ACF, anisotropic conductive paste (ACP), or anisotropic conductive adhesive (ACA). In a bonding process, an ultrasonic bonding process may be used. In some embodiments, the first circuit board 210 and the second circuit board 220 may be bonded to a surface of the transparent substrate 100 at a temperature range of approximately 70 to 150 °C using ACF or the like.

Each of the first circuit board 210 and the second circuit board 220 may include apertures 212 or 222 for alignment, and the transparent substrate 100 may include marking points 190 for alignment, so as to precisely and electrically connect the first circuit board 210 and the second circuit board 220 to the transparent substrate 100. Therefore, the apertures 212 and 222 are formed in the first circuit board 210 and the second circuit board 220, and the marking points 190 are formed in the transparent substrate 100. Using the apertures 212 and 222 and the marking points 190, the first circuit board 210 and the second circuit board 220 can be precisely aligned with the transparent substrate 100.

At least one of the first circuit board 210 and the second circuit board 220 may include a touch sensor chip 211 or may be electrically connected to the touch sensor chip 211. The touch sensor chip 211 may be installed in the first circuit board 210 or the second circuit board 220. Alternatively, the touch sensor chip 211 may be installed in a mainboard of a touch sensing apparatus. In this case, the first circuit board 210 or the second circuit board 220 may be connected to the mainboard of the touch sensing apparatus (such as a mobile phone) having the touch sensor chip 211 embedded therein. In FIG. 13, a case where the touch sensor chip 211 is installed in the first circuit board 210 is illustrated for ease of description. The touch sensor chip 211 may transmit driving signals to patch electrodes 123 and receive sensing signals from column electrodes 111 to determine whether a touch event has occurred or detect the number of touch events. In addition, the touch sensor chip 211 may correct or modulate a touch location value based on a received sensing signal.

The connection wirings 181 that are electrically connecting the first circuit board 210 and the second circuit board 220 may be formed in the peripheral region 150. When the touch sensor chip 211 is installed in the first circuit board 210, as illustrated in FIG. 13, the first circuit board 210 and the second circuit board 220 may be electrically connected to each other to deliver signals of the second circuit board 220 to the touch sensor chip 211 of the first circuit board 210. The connection wirings 181 may be formed of substantially the same material and at substantially the same time as the column electrodes 111, the patch electrodes 123, the first wirings 160, and the second wirings 133. Alternatively, the connection wirings 181 may be formed of metal such as silver after the column electrodes 111, the patch electrodes 123, the first wirings 160, and the second wirings 133 are formed. In this case, the connection wirings 181 may be formed at a temperature range between room temperature and approximately 60 °C.

Wiring patterns for receiving sensing signals from the column electrodes 111 and delivering driving signals to the patch electrodes 123 may be formed in advance in the first circuit board 210 and the second circuit board 220. The wiring patterns may be electrically connected to the first wirings 160 and the second wirings 133 or the metal wirings 180 by vias.

As for the wiring patterns of the first circuit board 210 and the second circuit board 220, each of the first circuit board 210 and the second circuit board 220 may include a first layer which includes a plurality of wirings 213 extending in a vertical direction, a second layer which includes a plurality of wirings 214 extending in a horizontal direction, and an insulating layer which is interposed between the first layer and the second layer. The wirings 213 of the first layer may be electrically connected to the wirings 214 of the second layer by via holes. For ease of description, a case where the wirings 213 of the first layer extend in the vertical direction and where the wirings 214 of the second layer extend in the horizontal direction has been described above. However, the wirings 213 of the first layer and the wirings 214 of the second layer can also extend in different directions.

Referring to FIGS. 13 and 14, in the first circuit board 210, the wirings 213 of the first layer may extend in the vertical direction and may be electrically connected to the respective metal wirings 180. The wirings 214 of the second layer may extend in the horizontal direction and may be electrically connected to the wirings 213 by via holes. Herein, some of the wirings 214 of the second layer may be electrically connected to the wirings 213 of the first layer that are connected to each pair of the column electrodes 111 that are electrically connected to each other. In addition, the remaining wirings 214 may be electrically connected to the wirings 213 of the first layer that are connected to the patch electrodes 123 that are electrically connected to each other. This connection relationship allows sensing signals from each pair of electrically connected column electrodes 111 to be received through one wiring and allows driving signals to be simultaneously delivered to the electrically connected patch electrodes 123.

The first circuit board 210 may further include additional wirings 215 through 217. The additional wirings 215 and 216 may be connected to the connection wirings 181 to receive sensing signals from the second circuit board 220 or deliver driving signals to the second circuit board 220. The additional wirings 217 may be electrically connected to the wirings 214 of the second layer to receive sensing signals or deliver driving signals.

A sputtering and etching process for forming wiring patterns or a printing process such as silkscreen typically has a lower yield than processes for attaching a circuit board such as ACF, ACP and ACA. In a touch sensing apparatus according to an embodiment of the present invention, wiring patterns may not be printed directly on a bezel region of a transparent substrate. That is, wiring patterns are not directly printed or sputtered and etched on the transparent substrate. Instead, a first circuit board and a second circuit board having wiring patterns pre-printed thereon are attached to a transparent substrate. This can simplify the process of manufacturing the touch sensing apparatus and increase the yield.

Furthermore, because the first circuit board and the second circuit board can replace wiring patterns formed directly on the transparent substrate, a process of forming an insulating layer to protect the wiring patterns can be omitted, thereby simplifying the process of manufacturing the touch sensing apparatus.

The first circuit board and the second circuit board may be FPCBs. Therefore, if the area of the bezel region that is used to have wiring patterns is reduced, if the first and second circuit boards having the wiring patterns printed thereon are bonded to the transparent substrate, and if the first and second circuit boards are folded toward a rear surface of the transparent substrate, the overall bezel width can be reduced. Accordingly, this can reduce the size of the substrate. Also, because the bezel width is reduced while the size of the substrate remains unchanged, an image can be displayed on a larger screen.

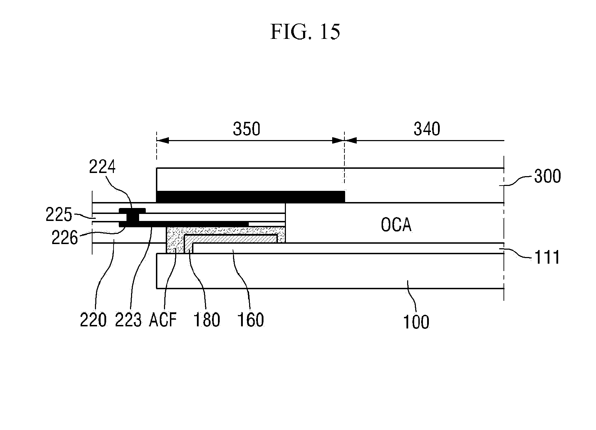

FIG. 15 is a cross-sectional view taken along line A-A' of FIG. 13. Referring to FIG. 15, the column electrodes 111 may be formed on the transparent substrate 100, and the first wirings 160 may be disposed at respective ends of the column electrodes 111. The metal wirings 180 may be disposed on respective side surfaces of the first wirings 160 and/or on the first wirings 160. As described above, the second circuit board 220 may be placed on the metal wiring 180 using ACF, ACP, ACA, or the like. In addition, a transparent window 300 including a peripheral region 350 having a black mask and a touch sensing region 340 may be bonded to the second circuit board 220 using an adhesive such as an optically clear adhesive (OCA).

In the second circuit board 220, a plurality of wirings 223 of a first layer may be electrically connected to the metal wirings 180. In addition, in the second circuit board 220, the wirings 223 of the first layer are insulated from a plurality of wirings 224 of a second layer by an insulating layer 225. However, some of the wirings 223 of the first layer may be electrically connected to the wirings 224 of the second layer by via holes 225.

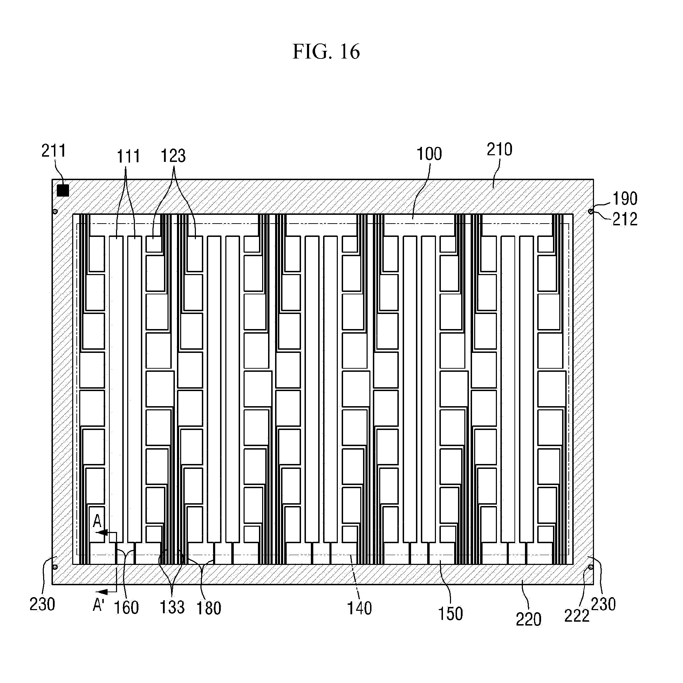

FIG. 16 is a plan view of a transparent substrate 100 and circuit boards according to another embodiment of the present invention. FIG. 16 is substantially the same as FIG. 13 except that a third circuit board 230 electrically connecting a first circuit board 210 and a second circuit board 220 is further disposed on the transparent substrate 100 and that the first through third circuit boards 210 through 230 are integrated, and thus a repetitive description thereof will be omitted.

The third circuit board 230 may be placed on the transparent substrate 100. The third circuit board 230 may be placed on sides of a touch sensing region 140 on which the first circuit board 210 and the second circuit board 220 are not placed, that is, sides on which connection wirings 181 are placed in FIG. 13. The third circuit board 230 electrically connects the first circuit board 210 and the second circuit board 220 and is used to deliver signals between the second circuit board 220 and a touch sensor chip 211 of the first circuit board 210.

The first through third circuit boards 210 through 230 may be integrated or separated. When the first through third circuit boards 210 through 230 are separated, they may be electrically connected to each other by a connector.

Referring back to FIG. 1, the touch sensing apparatus 1000 according to an embodiment of the present invention may include the transparent window 300. The transparent window 300 may be placed on a surface of the transparent substrate 100 or may be placed on the first circuit board 210 and the second circuit board 220. The transparent window 300 may be made of a high-strength material such as toughened glass or acrylic resin or a hard material applicable to flexible displays, such as PET, PC, PES, PI or PMMA. The transparent window 300 maintains the exterior of an input portion of the touch sensing apparatus 1000. At least part of the transparent window 300 is exposed and thus touched by a user's body or a stylus pen and protects the touch sensing apparatus 1000 from such touches.

When the touch sensing apparatus 1000 further performs an image displaying function, it may include a display panel 400. The display panel 400 is a panel that displays images, and examples of the display panel 400 may include a liquid crystal display (LCD) panel, an electrophoretic display panel, an organic light-emitting diode (OLED) panel, a light-emitting diode (LED) panel, an inorganic electroluminescent (EL) display panel, a field emission display (FED) panel, a surface-conduction electron-emitter display (SED) panel, a plasma display panel (PDP), and a cathode ray tube (CRT) display panel. In some embodiments, the touch sensing apparatus 1000 may include a display panel controller (not shown) that transmits a signal for displaying an image on the display panel 400.

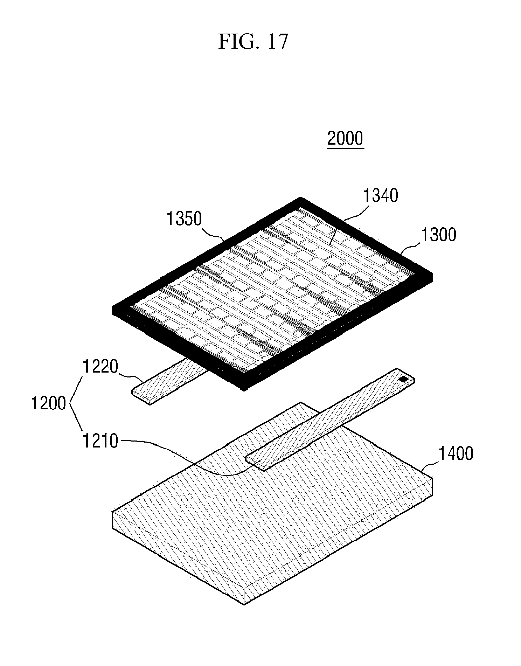

FIG. 17 is an exploded perspective view of a touch sensing apparatus 2000 according to another embodiment of the present invention.

Referring to FIG. 17, the touch sensing apparatus 2000 includes a transparent window 1300 on which a plurality of column electrodes 1311, a plurality of patch electrodes 123, and a plurality of connection wirings 181 are deposited and formed as a single piece or pattern and a circuit board 1200 that includes a first circuit board 1210 and a second circuit board 1220. When the touch sensing apparatus 2000 further performs an image displaying function, it may further include a display panel 1400. The display panel 1400 is substantially the same as the display panel 400 of FIG. 1, and thus a repetitive description thereof will be omitted.

Referring to FIG. 17, the transparent window 1300 includes a touch sensing region 1340 and a peripheral region 1350. A plurality of column electrodes, a plurality of patch electrodes, a plurality of first wirings, and a plurality of second wirings may be formed as a single piece or pattern in the touch sensing region 1340 of the transparent window 1300. FIG. 17 is substantially the same as FIG. 1 except that the touch sensing region 1340, the peripheral region 1350 and electrodes and wirings of the regions 1340 and 1350 are formed in the transparent window 1300, not in a transparent substrate, and that the first circuit board 1210 and the second circuit board 1220 are attached to the transparent window 1300, not to the transparent substrate, and thus a repetitive description thereof will be omitted.

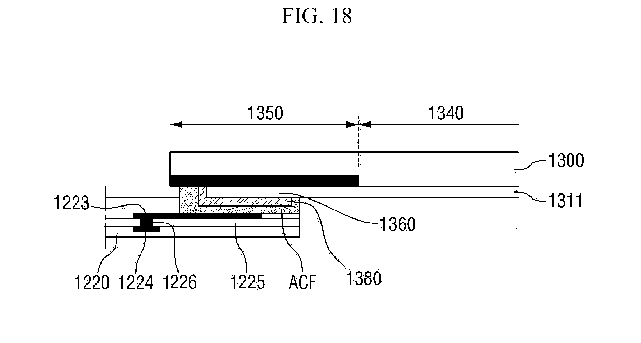

FIG. 18 is a cross-sectional view of the touch sensing apparatus 2000 illustrated in FIG. 17. Referring to FIG. 18, the column electrode 1311 may be formed on the transparent window 1300, and first wirings 1360 may be disposed at respective ends of the column electrodes 1311. Metal wirings 1380 may be disposed on respective side surfaces of the first wirings 1360 and/or on the first wirings 1360. As described above, the second circuit board 1220 may be placed on the metal wirings 1380 using ACF, ACP, ACA, or the like.

In the second circuit board 1220, a plurality of wirings 1223 of a first layer may be electrically connected to the metal wirings 1380. In addition, the wirings 1223 of the first layer may be insulated from a plurality of wirings 1224 of a second layer by an insulating layer 1225. However, some of the wirings 1223 of the first layer may be electrically connected to the wirings 1224 of the second layer by via holes 1226.

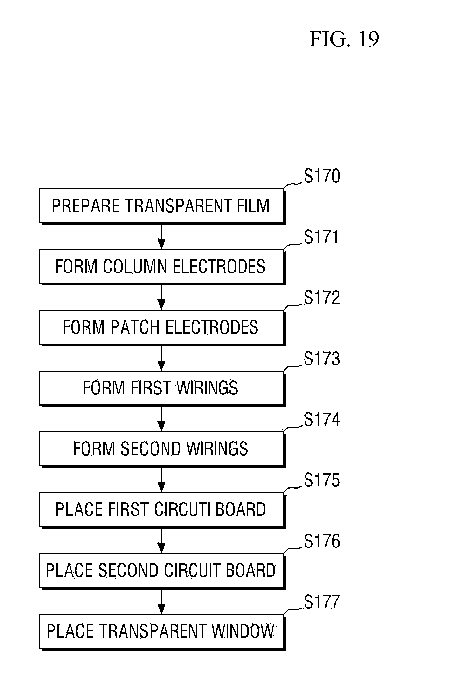

FIG. 19 is a flowchart illustrating a method of manufacturing a touch sensing apparatus according to an embodiment of the present invention.

In the method of manufacturing a touch sensing apparatus, a transparent substrate including a touch sensing region and a peripheral region surrounding the touch sensing region is prepared (operation S170). The touch sensing region and the peripheral region of the transparent substrate are substantially the same as those of the transparent substrates 100 of FIGS. 1 through 16, and thus a repetitive description thereof will be omitted. In some embodiments, a transparent window including a touch sensing region and a peripheral region surrounding the touch sensing region may be prepared. In this case, the touch sensing region and the peripheral region of the transparent window are substantially the same as those of the transparent window 1300 of FIG. 17, and thus a repetitive description thereof will be omitted.

Next, a plurality of column electrodes extending in a vertical direction are formed in the touch sensing region (operation S171), a plurality of patch electrodes are formed to be arranged in a plurality of columns and to be adjacent to a side of each of the column electrodes (operation S172), a plurality of first wirings that are respectively and electrically connected to the column electrodes are formed (operation S173), and a plurality of second wirings that are respectively and electrically connected to the patch electrodes are formed (operation S174). The column electrodes, the patch electrodes, the first wirings, and the second wirings are substantially the same as those of FIGS. 1 through 17, and thus a repetitive description thereof will be omitted. Operations S171, S171, S173 and S174 may be performed substantially simultaneously.

Next, a first circuit board is placed on a side of the touch sensing region (operation S175), and a second circuit board is placed on another side which faces the side of the touch sensing region (operation S176). Placing the first circuit board and the second circuit board and accurately aligning the first circuit board and the second circuit board are substantially the same as those described with reference to FIGS. 1 through 17, and thus a repetitive description thereof will be omitted.

A transparent window is placed on a surface of the transparent substrate (operation S177). The transparent window may be placed on the first circuit board and the second circuit board. The transparent window is substantially the same as those of FIGS. 1 through 16, and thus a repetitive description thereof will be omitted. In some embodiments, when a transparent window including a touch sensing region and a peripheral region surrounding the touch sensing region is prepared as described above with reference to FIG. 17, operation S177 may be omitted.

When the touch sensing apparatus further performs an image displaying function, a display panel may be placed on the other surface of the transparent substrate (or film). The display panel is substantially the same as those of FIGS. 1 through 17, and thus a repetitive description thereof will be omitted.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A touch sensing apparatus having a transparent substrate that includes a touch sensing region and a peripheral region outside the touch sensing region, the touch sensing region comprising:
a pair of column electrodes extending in a vertical direction;
a plurality of patch electrodes arranged in two columns in the vertical direction, the two columns of patch electrodes interposed between the pair of column electrodes without an intervening column electrode;
a plurality of first wirings electrically connected to the pair of column electrodes; and
a plurality of second wirings electrically connected to the two columns of patch electrodes.

2. The apparatus of claim 1, wherein the pair of column electrodes, the two columns of patch electrodes, the first wirings and the second wirings are formed as a single pattern on a surface of the transparent substrate.

3. The apparatus of claim 1 or claim 2, wherein the second wirings are electrically connected to the two columns of patch electrodes through a space between the two columns of patch electrodes.

4. The apparatus of the preceding claims, further comprising a circuit board including a first circuit board on a first side of the touch sensing region and a second circuit board on a second side facing the first side of the touch sensing region, wherein each of the first circuit board and the second circuit board is electrically connected to the first wirings and the second wirings, respectively.

5. The apparatus of the preceding claims, wherein each of the first circuit board and the second circuit board comprises:
a first layer comprising a plurality of wirings that extend in the vertical direction;
a second layer comprising a plurality of wirings that extend in a horizontal direction; and
an insulating layer between the first layer and the second layer,
wherein one of the wirings of the first layer is electrically connected to one of the wirings of the second layer through a via hole.

6. The apparatus of claim 5, wherein the first wirings and the second wirings extend to the peripheral region, and the peripheral region includes a plurality of metal wirings electrically connected to the first wirings and the second wirings, wherein the metal wirings are also electrically to the wirings of the first layer.

7. The apparatus of claim 5 or claim 6, wherein the peripheral region includes a connection wiring that electrically connects the first circuit board and the second circuit board.

8. The apparatus of claim 4, wherein the circuit board further includes a third circuit board that electrically connects the first circuit board and the second circuit board.

9. The apparatus of the preceding claims, wherein at least one of the first circuit board and the second circuit board includes a touch sensor chip, and the first circuit board and the second circuit board are flexible printed circuit boards (FPCBs).

10. The apparatus of the preceding claims, wherein the pair of the column electrodes are electrically connected to each other.

11. The apparatus of claim 10, wherein a structure where the two columns of patch electrodes are interposed between the pair of column electrodes is repeated in the touch sensing region,
wherein a side of each of the pair of column electrodes neighbors the two columns of the patch electrodes, and the other side of each of the pair of the column electrodes neighbors another column electrode which is electrically isolated from the corresponding column electrode.

12. The apparatus of claim 11, wherein the two columns of patch electrodes comprise a plurality of first patch electrodes which are adjacent to one of the pair of column electrodes and a plurality of second patch electrodes which are adjacent to the other one of the pair of column electrodes, wherein first patch electrodes arranged on substantially the same horizontal axis among the first patch electrodes are electrically connected to each other, and second patch electrodes arranged on substantially the same horizontal axis among the second patch electrodes are electrically connected to each other.

13. A method of manufacturing a touch sensing apparatus, the method comprising:
preparing a transparent substrate having a touch sensing region and a peripheral region outside the touch sensing region;
forming a pair of column electrodes that extend in a vertical direction in the touch sensing region;
forming a plurality of patch electrodes to be arranged in two columns in the vertical direction, the two columns of patch electrodes interposed between the pair of column electrodes without an intervening column electrode;
forming a plurality of first wirings that are electrically connected to the pair of column electrodes;
forming a plurality of second wirings that are electrically connected to the two columns of patch electrodes;
placing a first circuit board on a first side of the touch sensing region; and
placing a second circuit board on a second side which faces the first side of the touch sensing region,
wherein the first circuit board and the second circuit board is electrically connected to the first wirings and the second wirings, respectively.

14. The method of claim 13, wherein the pair of column electrodes, the two columns of patch electrodes, the first wirings and the second wirings are deposited on the same layer, formed as a single piece, and simultaneously formed of substantially the same material.

15. The method of claim 14, wherein the pair of column electrodes, the two columns of patch electrodes, the first wirings and the second wirings are formed by sputtering a transparent conductive material at 130 to 150 °C and then etching the transparent conductive material.

16. The method of claim 13 to claim 15, wherein each of the first circuit board and the second circuit board comprises:
a first layer comprising a plurality of wirings which extend in the vertical direction;
a second layer comprising a plurality of wirings which extend in a horizontal direction; and
an insulating layer between the first layer and the second layer,
wherein the wirings of the first layer are electrically connected to the wirings of the second layer by via holes.
